# EUROPÄISCHE PATENTANMELDUNG

(11) **EP 4 467 245 A1**
(43) Veröffentlichungstag der Anmeldung: **27.11.2024**
(21) Anmeldenummer: 24167052.0
(22) Anmeldetag: 27.03.2024
(51) Int. Cl.: B05B 15/65, F16L 37/00

(54) **KUPPLUNGSSYSTEM FÜR LEIMSCHLÄUCHE UND VERFAHREN ZUM BETREIBEN EINER BELEIMUNGSMASCHINE**

(30) Priorität: 26.05.2023 DE 102023113975
(71) Anmelder: Krones Aktiengesellschaft, 93073 Neutraubling (DE)
(72) Erfinder: CANALICCHIO, Christian, 93073 Neutraubling (DE); DIETERSBERGER, Martin, 93073 Neutraubling (DE); GABLER, Markus, 93073 Neutraubling (DE); STADLER, Thomas, 93073 Neutraubling (DE); VOCKENSPERGER, Simon, 93073 Neutraubling (DE); NIEDERMAIER, Rainer, 93073 Neutraubling (DE); HILLE, Florian, 93073 Neutraubling (DE)
(74) Vertreter: Benninger, Johannes

(57) **Zusammenfassung**

Es ist ein Kupplungssystem (1) zur fluidischen Verbindung von Leimschläuchen (5, 5`, 15, 15') offenbart. Das Kupplungssystem (1) umfasst ein Gehäuse (40) sowie mindestens ein an einem Leimschlauch (15, 15') eines Leimgeräts (72) befestigbares Kupplungsstück (6, 6'), welches durch das Gehäuse (40) aufgenommen ist und welches selektiv und jeweils lösbar mit Gegenkupplungsstücken (8, 8') mehrerer Leimschläuche (5, 5') unterschiedlicher Leimauftragsformatteile koppelbar ist, so dass zwischen dem jeweiligen Leimschlauch (15, 15`) des Leimgeräts und dem jeweiligen weiteren Leimschlauch (5, 5') des jeweiligen Leimauftragsformatteils über das Kupplungsstück (6, 6') und das mit dem Kupplungsstück (6, 6') gekoppelte Gegenkupplungsstück (8, 8') eine fluidische Verbindung ausgebildet ist.

## Beschreibung

Die vorliegende Erfindung betrifft ein Kupplungssystem, eine Beleimungsmaschine sowie ein Verfahren zum Betreiben einer solchen Beleimungsmaschine.

Beim Umgang mit Artikeln wie Getränkebehältern oder dergleichen werden in der Praxis Leimgeräte eingesetzt, die über entsprechende Applikationsköpfe einen Leimauftrag abgeben können, um mittels des Leimauftrages eine Fixierung bereitstellen zu können. Vom jeweiligen Leimgerät wird der Leim über eine jeweilige Schlauchverbindung zum jeweiligen Applikationskopf geführt.

Ein Beleimungsgerät, welches über eine entsprechend ausgestaltete Schlauchverbindung Kaltleim für einen Applikationskopf bereitstellen kann, ist bereits aus der deutschen Gebrauchsmusterschrift DE 20 2014 100 123 U1 bekannt. Dieses bekannte Beleimungsgerät ist als Drehschieberpumpe zum Fördern von Leim ausgebildet. Die Drehschieberpumpe umfasst einen Rotor, der wenigstens zwei sich überkreuzende Schieber besitzt. Weiter ist ein Stator vorgesehen, dessen wirksamer Querschnitt derart von einer Kreisform abweicht, dass die Schieber in Verschieberichtung unabhängig von der Drehlager des Rotors ein Spiel von höchstens zwei Millimetern haben sollen.

Sofern eine Maschine, in welchem ein solches Leimgerät verwendet wird, eine Vielzahl unterschiedlicher Leimauftragsformatteile umfasst, über die jeweils Leim aufgetragen werden kann, werden solche Leimauftragsformatteile bis dato mit einer jeweiligen festen Schlauchverbindung an das Leimgerät fluidisch gekoppelt. In der Praxis besitzen Leimgeräte eine begrenzte Anzahl an Anschlüssen, so dass häufig mehrere Leimgeräte benötigt werden, wenn die Maschine eine Vielzahl unterschiedlicher Leimauftragsformatteile umfasst.

Die jeweiligen Schläuche, die zur Versorgung einer Vielzahl unterschiedlicher Leimauftragsformatteile erforderlich sind und die mehreren unterschiedlichen Leimgeräte verursachen einen hohen Platzbedarf, welcher regelmäßig nicht zur Verfügung steht.

Eine Aufgabe der Erfindung kann daher darin gesehen werden, eine Möglichkeit bereitzustellen, mit welcher sich die genannten Probleme zumindest teilweise vermeiden lassen.

Die obige Aufgabe wird durch die Gegenstände gelöst, welche die Merkmale in den unabhängigen Ansprüchen umfassen. Weitere vorteilhafte Ausgestaltungen werden durch die Unteransprüche beschrieben.

Die Erfindung betrifft ein Kupplungssystem zur fluidischen Verbindung von Leimschläuchen. Das Kupplungssystem umfasst ein Gehäuse sowie mindestens ein an einem Leimschlauch eines Leimgeräts befestigbares Kupplungsstück welches durch das Gehäuse aufgenommen ist und welches selektiv und lösbar mit Gegenkupplungsstücken mehrerer weiterer Leimschläuche unterschiedlicher Leimauftragungsformatteile jeweils koppelbar ist, so dass zwischen dem jeweiligen Leimschlauch des Leimgeräts und dem jeweiligen weiteren Leimschlauch des jeweiligen Leimauftragsformatteils über das Kupplungsstück und das mit dem Kupplungsstück gekoppelte Gegenkupplungsstück eine fluidische Verbindung ausgebildet ist.

Somit besteht in der Praxis die Möglichkeit an einem bestimmten Kupplungsstück des Kupplungssystems nacheinander sowie jeweils selektiv und lösbar mehrere weitere Leimschläuche mehrerer unterschiedlicher Leimauftragsformatteile über entsprechende Gegenkupplungsstücke zu koppeln, so dass zwischen dem jeweiligen Leimschlauch (bzw. der Versorgungsleitung für Leim) des Leimgeräts und dem jeweiligen weiteren Leimschlauch des jeweiligen Leimauftragsformatteils über das Kupplungsstück und das mit dem Kupplungsstück gekoppelte Gegenkupplungsstück eine fluidische Verbindung ausgebildet ist.

Es ist somit nicht mehr zwingend notwendig, mehrere Leimgeräte bereitzustellen, um eine Vielzahl unterschiedlicher Leimauftragsformatteile mit Leim versorgen zu können. Durch das Kupplungssystem kann einfach und unkompliziert zwischen einer Vielzahl an unterschiedlichen Leimauftragsformatteilen gewechselt werden, wenn unterschiedliche Leimauftragsformatteile zum Aufbringen von Leim erforderlich sein sollten. Durch das Kupplungssystem kann eine Beleimungsmaschine kostengünstig und platzsparend ausgestaltet werden.

Bewährt haben sich Ausführungsformen, bei denen das mindestens eine Kupplungsstück einen Kupplungskörper ausbildet, in welchen zur jeweiligen Kopplung ein jeweiliges als Stecker ausgebildetes Gegenkupplungsstück einsteckbar ist. Solche Ausführungsformen ermöglichen eine schnelle und einfache Verbindung zwischen dem jeweiligen Kupplungsstück und dem jeweiligen Gegenkupplungsstück. Denkbar ist hierbei, dass das mindestens eine Kupplungsstück eine Betätigungshülse umfasst, die zum Aufheben einer zwischen dem mindestens einen Kupplungsstück und dem Gegenkupplungsstück ausgebildeten Koppelung in axialer Richtung bewegbar auf dem Kupplungskörper aufsitzt.

Es kann hierbei in diversen Ausführungsformen sein, dass die Betätigungshülse den Kupplungskörper zumindest bereichsweise aufnimmt bzw. dass die Betätigungshülse radial um den Kupplungskörper verläuft.

Alternativ oder ergänzend hierzu kann es sein, dass das mindestens eine Kupplungsstück mehrere Rastkugeln umfasst, über die das als Stecker ausgebildete Gegenkupplungsstück selbständig am Kupplungskörper verriegelt wird, wenn das jeweilige als Stecker ausgebildete Gegenkupplungsstück in den Kupplungskörper eingesteckt wird. Sofern das mindestens eine Kupplungsstück zusätzlich die vorherig erwähnte Betätigungshülse umfasst, kann es sein, dass das mindestens eine Kupplungsstück derart ausgebildet ist, dass eine über die mehreren Rastkugeln ausgebildete Verriegelung durch eine Bewegung der Betätigungshülse in axialer Richtung aufhebbar ist.

Bei diesen beschriebenen Ausführungsformen oder auch im allgemeinen Zusammenhang kann es sein, dass das mindestens eine Kupplungsstück derart ausgebildet ist, dass das mindestens eine Kupplungsstück das jeweilige als Stecker ausgebildete Gegenkupplungsstück bei Einstecken in den Kupplungskörper automatisch verriegelt.

Auch kann es sein, dass das Kupplungssystem mindestens ein Heizelement zur Temperierung des mindestens einen Kupplungsstücks umfasst, wobei das mindestens eine Heizelement im Gehäuse aufgenommen ist. Bei dem mindestens einen Heizelement kann es sich um mindestens eine Heizpatrone handeln. Alternativ oder ergänzend hierzu kann das mindestens eine Heizelement durch mindestens eine elektrisch betreibbares Heizelement ausgebildet sein. Somit kann es in diversen Ausführungsformen sein, dass Leim über das mindestens eine Kupplungsstück erwärmt wird und das Kupplungssystem als Heißleim verlässt. Eine in der Praxis sinnvoll handhabbare Temperatur von Heißleim, welcher das Kupplungssystem verlässt, kann hierbei zwischen etwa 130° C bis hin zu Temperaturbereichen von etwa 190° C betragen.

Das Gehäuse kann aus wenigstens zwei korrespondierenden Teilen gebildet sein, die das mindestens eine Kupplungsstück von außen unzugänglich aufnehmen, wenn die wenigstens zwei korrespondierenden Teile zusammengefügt sind. Weiter können die wenigstens zwei korrespondierenden Teile derart trennbar sein, dass durch das Trennen der wenigstens zwei korrespondierenden Teile auf das mindestens eine Kupplungsstück zugegriffen werden kann bzw. dass ein Benutzer durch das Trennen der wenigstens zwei korrespondierenden Teile auf das mindestens eine Kupplungsstück zugreifen kann.

Alternativ oder ergänzend hierzu kann das Kupplungssystem einen Schließmechanismus zum Verriegeln der wenigstens zwei korrespondierenden Teile umfassen, wenn diese zusammengefügt sind. Der Schließmechanismus kann zum Aufheben der Verriegelung betätigbar sein. Bewährt haben sich hierbei Ausführungsformen, bei denen es sich bei dem Schließmechanismus um eine Bolzen-Zylindereinheit handeln. Die Bolzen-Zylindereinheit kann auf dem Gehäuse bzw. auf einem der wenigstens zwei korrespondierenden Teile des Gehäuses aufsitzen.

Die Erfindung betrifft zudem eine Beleimungsmaschine. Diese Beleimungsmaschine kann insbesondere und vorzugsweise zum Durchführen der nachfolgend noch beschriebenen Ausführungsformen des erfindungsgemäßen Verfahrens jeweils ausgebildet sein.

Die erfindungsgemäße Beleimungsmaschine umfasst wenigstens ein Leimgerät mit mindestens einem Leimschlauch. Weiter umfasst die Beleimungsmaschine mehrere Leimauftragsformatteile mit einem jeweiligen weiteren Leimschlauch, welche mehreren Leimauftragsformatteile jeweils zum Aufbringen von Leim auf Behälter und/oder Verpackungen für Behälter ausgebildet sind. Bei den mehreren Leimauftragsformatteilen kann es sich um Applikationsköpfe handeln, welche Leim auf Behälter und/oder Verpackungen für Behälter aufbringen können, indem sie Leim auf Behälter und/oder Verpackungen aufsprühen.

Auch kann es sich bei den mehreren Leimauftragsformatteilen um mehrere Leimwalzen handeln, welche mehreren Leimwalzen Leim auf Behälter und/oder Verpackungen für Behälter aufbringen können, indem sich die mehreren Leimwalzen jeweils drehen und hierbei mit den Behältern und/oder Verpackungen in Oberflächenkontakt stehen.

Es ist vorgesehen, dass die Beleimungsmaschine mindestens ein Kupplungssystem mit einem Gehäuse und mindestens einem Kupplungsstück umfasst, welches mindestens eine Kupplungsstück durch das Gehäuse aufgenommen ist und mit dem mindestens einen Leimschlauch des wenigstens einen Leimgeräts fluidisch verbunden ist. Das Kupplungssystem kann gemäß den vorherig beschriebenen Ausführungsbeispielen jeweils ausgebildet sein, ohne dass erneut auf die bereits beschriebenen Ausführungsbeispiele Bezug genommen wird.

Die mehreren weiteren Leimschläuche der mehreren Leimauftragsformatteile umfassen jeweils ein Gegenkupplungsstück. Das mindestens eine Kupplungsstück ist selektiv und lösbar mit den Gegenkupplungsstücken der weiteren Leimschläuche jeweils koppelbar, so dass zwischen dem jeweiligen Leimschlauch des Leimgeräts und dem jeweiligen weiteren Leimschlauch des jeweiligen Leimauftragsformatteils über das Kupplungsstück und das mit dem Kupplungsstück jeweils gekoppelte Gegenkupplungsstück eine fluidische Verbindung ausgebildet ist.

Auch bei der Beleimungsmaschine kann es sein, dass das mindestens eine Kupplungsstück einen Kupplungskörper ausbildet und die Gegenkupplungsstücke jeweils als Stecker ausgebildet sind, die zur jeweiligen Koppelung mit dem Kupplungskörper jeweils in die Kupplungskörper einsteckbar sind.

Bewährt hat es sich auch bei der Beleimungsmaschine, wenn das mindestens eine Kupplungsstück derart ausgebildet ist, dass das mindestens eine Kupplungsstück das jeweilige als Stecker ausgebildete Gegenkupplungsstück bei Einstecken in den Kupplungskörper automatisch verriegelt.

Weiter kann es sein, dass das Kupplungssystem mindestens ein Heizelement zur Temperierung des mindestens einen Kupplungsstücks umfasst, wobei das mindestens eine Heizelement im Gehäuse des Kupplungssystems aufgenommen ist. Bei dem mindestens einen Heizelement kann es sich um mindestens eine Heizpatrone handeln.

Bewährt haben sich zudem Ausführungsformen, bei denen die Beleimungsmaschine einen Schließmechanismus zum Verriegeln des Gehäuses besitzt. Auch bei dem Schließmechanismus der Beleimungsmaschine kann es sich um eine Bolzen-Zylindereinheit handeln.

Die Beleimungsmaschine kann mindestens einen Temperatursensor zum Feststellen einer Ist-Temperatur des mindestens einen Kupplungsstücks umfassen, wobei der mindestens eine Temperatursensor und der Schließmechanismus miteinander in Wirkverbindung stehen, so dass ein Aufheben einer über den Schließmechanismus hergestellten Verriegelung unterbunden ist, wenn sich die über den Temperatursensor festgestellte jeweilige Ist-Temperatur oberhalb einer vorgegebenen Soll-Temperatur befindet.

Die Beleimungsmaschine kann außerdem eine Steuereinrichtung umfassen, die mit dem mindestens einen Temperatursensor und dem Schließmechanismus jeweils in Verbindung steht und über den mindestens einen Temperatursensor eine jeweilige Ist-Temperatur des mindestens einen Kupplungsstücks erkennen bzw. feststellen kann. Auf der Steuereinrichtung können Informationen zu der vorgegebenen Soll-Temperatur hinterlegt sein. Weiter kann die Steuereinrichtung derart ausgebildet sein, dass sie ein Aufheben einer über den Schließmechanismus hergestellten Verriegelung unterbindet, wenn sich die über den mindestens einen Temperatursensor festgestellte bzw. erkannte jeweilige Ist-Temperatur oberhalb einer vorgegebenen Soll-Temperatur befindet.

Bei der Beleimungsmaschine kann das Kupplungssystem innerhalb einer definierten Sicherheitszone der Beleimungsmaschine angeordnet sein und mindestens einen Sicherheitssensor umfassen, über den eine Präsenz einer Person in der Sicherheitszone erkennbar ist. Der mindestens eine Sicherheitssensor und das Leimgerät können derart miteinander in Wirkverbindung stehen, dass eine Förderung von Leim durch das Leimgerät unterbunden ist, wenn durch den mindestens einen Sicherheitssensor eine Präsenz einer Person in der Sicherheitszone erkannt wird.

Es kann eine Steuereinrichtung vorgesehen sein, welche mit dem mindestens einen Sicherheitssensor und dem Leimgerät in Verbindung steht. Die Steuereinrichtung kann derart ausgebildet sein, dass diese eine Förderung von Leim durch das Leimgerät selbständig unterbindet, wenn die Steuereinrichtung durch den mindestens einen Sicherheitssensor eine Präsenz einer Person in der Sicherheitszone erkennt. Bei dem mindestens einen Sicherheitssensor kann es sich beispielsweise um eine Kamera handeln, deren Erfassungsbereich sich über die Sicherheitszone erstreckt. Auch kann es sich bei dem mindestens einen Sicherheitssensor um einen Tastsensor handeln, welcher ein Öffnen einer Tür erkennt, die einen Zugang zur Sicherheitszone für eine Person ermöglicht.

Die Erfindung betrifft zudem eine Etikettiervorrichtung für Getränkebehälter, welche eine Beleimungsmaschine gemäß einem Ausführungsbeispiel der vorhergehenden Beschreibung umfasst.

Auch betrifft die Erfindung einen Packer für Getränkebehälter, der eine Beleimungsmaschine gemäß einem Ausführungsbeispiel der vorhergehenden Beschreibung umfasst.

Weiter betrifft die Erfindung ein Verfahren zum Betreiben einer Beleimungsmaschine. Die Beleimungsmaschine umfasst hierbei ein Leimgerät mit mindestens einem Leimschlauch und besitzt ein Kupplungssystem mit einem Gehäuse, in dem sich mindestens ein Kupplungsstück befindet, das an dem mindestens einen Leimschlauch befestigt ist. Zudem sind bei dem Verfahren mehrere unterschiedliche Leimauftragsformatteile vorgesehen, die jeweils eine weitere Schlauchverbindung mit einem jeweiligen Gegenkupplungsstück besitzen, wobei das Kupplungsstück selektiv und lösbar mit den Gegenkupplungsstücken jeweils koppelbar ist, so dass zwischen dem jeweiligen Leimschlauch des Leimgeräts und dem jeweiligen weiteren Leimschlauch des jeweiligen Leimauftragsformatteils über das Kupplungsstück und das mit dem Kupplungsstück gekoppelte Gegenkupplungsstück eine fluidische Verbindung ausgebildet wird.

Das Verfahren umfasst zumindest die folgenden Schritte, was jedoch nicht als abschließend zu verstehen sein soll:
- Auswahl eines bestimmten Leimauftragsformatteils aus den mehreren unterschiedlichen Leimauftragsformatteilen und
- Koppeln des Kupplungsstücks mit dem Gegenkupplungsstück der weiteren Schlauchverbindung des ausgewählten Leimauftragsformatteils, womit einhergehend zwischen dem jeweiligen Leimschlauch des Leimgeräts und dem jeweiligen weiteren Leimschlauch des jeweiligen ausgewählten Leimauftragsformatteils über das Kupplungsstück und das mit dem Kupplungsstück gekoppelte Gegenkupplungsstück eine fluidische Verbindung ausgebildet wird.

Das Kupplungssystem kann in diversen Ausführungsformen einen Schließmechanismus besitzen, über den das Gehäuse verriegelt ist. Weiter kann eine jeweilige Ist-Temperatur des Kupplungsstücks über einen Temperatursensor festgestellt werden, wobei der Temperatursensor und die Verriegelung zusammenwirken, so dass die Verriegelung aufrechterhalten wird, wenn sich die Ist-Temperatur oberhalb einer vorgegebenen Soll-Temperatur befindet.

Es kann sein, dass das Verfahren mit einer der vorhergehend bereits beschriebenen Ausführungsformen der erfindungsgemäßen Beleimungsmaschine umgesetzt bzw. durchgeführt wird.

An dieser Stelle sei ergänzend betont, dass Merkmale, welche vorhergehend zu Ausführungsform des erfindungsgemäßen Kupplungssystems beschrieben wurden, gleichermaßen Teilaspekte des erfindungsgemäßen Verfahrens sowie der erfindungsgemäßen Beleimungsmaschine betreffen oder sein können. Wenn daher an einer Stelle bei der Beschreibung oder auch bei den Anspruchsdefinitionen von einer Ausführungsform des erfindungsgemäßen Kupplungssystems die Rede ist, so gilt dies gleichermaßen für die Ausführungsformen des erfindungsgemäßen Verfahrens und der erfindungsgemäßen Beleimungsmaschine.

In umgekehrter Weise gilt dasselbe, so dass auch alle Aspekte und Ausführungsvarianten, die im Zusammenhang mit Ausführungsformen des erfindungsgemäßen Verfahrens oder der erfindungsgemäßen Beleimungsmaschine erläutert wurden, gleichermaßen Teilaspekte des erfindungsgemäßen Kupplungssystems betreffen oder sein können. Wenn daher an einer Stelle bei der Beschreibung oder auch bei den Anspruchsdefinitionen zum Verfahren oder zur Beleimungsmaschine von bestimmten Aspekten oder Wirkungen die Rede ist, so gilt dies gleichermaßen für die Ausführungsformen des erfindungsgemäßen Kupplungssystems. Auch kann es sein, dass diverse Ausführungsformen des erfindungsgemäßen Verfahrens mittels einer Ausführungsform des erfindungsgemäßen Kupplungssystems oder mittels einer Ausführungsform der erfindungsgemäßen Beleimungsmaschine umgesetzt oder durchgeführt werden.

Die nachfolgenden Ausführungen fassen nochmal einige Aspekte der zuvor bereits in verschiedenen Ausführungsvarianten erläuterten Erfindung zusammen, konkretisieren einige Aspekte, sollen jedoch nicht im Widerspruch zu den bereits gemachten Ausführungen gesehen werden, sondern in Zusammenschau, bei Zweifeln ggf. als speziellere Ausführungsvarianten und/oder Abwandlungen. So kann, wie bereits oben mehrfach erwähnt, das erfindungsgemäße Kupplungssystems die nachfolgenden Komponenten umfassen. Insbesondere dient das Kupplungssystem zur fluidischen Verbindung von Leimschläuchen. Das Kupplungssystem umfasst ein Gehäuse sowie mindestens ein an einem Leimschlauch eines Leimgeräts befestigbares Kupplungsstück, was nachfolgend anhand einer praktisch sinnvoll einsetzbaren Ausführungsvariante beschrieben wird.

Für unterschiedliche Auftragungsvorgänge, die nacheinander durchzuführen sind, kann es erforderlich sein, dass unterschiedliche Leimauftragsformatteile bzw. unterschiedliche Sprühköpfe notwendig sind, die an den jeweiligen Auftragsvorgang angepasst sind und je nach Applikationsvorgang über ein Leimgerät mit Leim versorgt werden. Aus diesem Grunde werden in der Praxis häufig mehrere Leimgeräte bereitgehalten, die mit einer Vielzahl unterschiedlicher Sprühköpfe fest verbunden sind, um zwischen unterschiedlichen Sprühköpfen wechseln zu können.

Gängige Beleimungsmaschinen, welche mehrere Leimgeräte für die Versorgung einer Vielzahl an Sprühköpfen mit Leim umfassen, verursachen regemäßig einen hohen Platzbedarf. Mit einem Kupplungssystem, wie es oben anhand verschiedener Ausführungsvarianten schon beschrieben wurde, und das wahlweise Bestandteil eines Packers sein kann, besteht ein geringerer Platzbedarf, wenn unterschiedliche Sprühköpfe für unterschiedliche Applikationsvorgänge benötigt werden. Zudem wird eine geringere Anzahl an Leimgeräten benötigt, so dass mittels des Kupplungssystems auch eine ökonomisch vorteilhafte Ausführungsform einer Beleimungsmaschine bereitgestellt werden kann.

Mit dem erfindungsgemäßen Kupplungssystem können die Leimschläuche mit den weiteren Leimschläuchen fluidisch verbunden werden. Die Leimschläuche führen dabei normalerweise vom Kupplungssystem zu einem Leimgerät bzw. zu einer Leimpumpe und sind fest mit dem Leimgerät bzw. mit der Leimpumpe verbunden. Ein solches Leimgerät kann über mehrere Ausgänge für Leim verfügen, so dass durch die beiden Leimschläuche über ein gemeinsames Leimgerät bzw. über eine gemeinsame Leimpumpe jeweils Leim gepumpt werden kann. Die Leitungsverbindung sorgt dafür, dass die beiden Leimschläuche jeweils fluidisch an ein gemeinsames Leimgerät bzw. an eine gemeinsame Leimpumpe gekoppelt sind.

Die weiteren Leimschläuche können ausgehend vom Kupplungssystem jeweils zu einem Leimauftragsformatteil führen. Bei den Leimauftragsformatteilen kann es sich beispielsweise um Sprühköpfe einer Etikettiervorrichtung handeln kann. Jedem Sprühkopf bzw. jedem Leimauftragsformatteil kann ein eigener weiterer Leimschlauch zugeordnet sein, über den der jeweilige Sprühkopf bzw. über den das jeweilige Leimauftragsformatteil mit Leim versorgt wird.

Um eine fluidische Verbindung zwischen den Leimschläuchen und den weiteren Leimschläuchen herstellen zu können, umfasst das Kupplungssystem zwei Kupplungsstücke, die als Kupplungskörper ausgebildet sein können. An einem Endbereich ist an den Leimschläuchen, die ausgehend von einem Leimgerät bzw. einer Leimpumpe zum Kupplungssystem führen, jeweils ein Gegenkupplungsstück angebracht, welches jeweilige Gegenkupplungsstück als Stecker ausgebildet sein kann.

Die Gegenkupplungsstücke werden in die Kupplungsstücke eingesteckt, so dass ein jeweiliges Gegenkupplungsstück fest mit einem jeweiligen Kupplungsstück verbunden ist. Das jeweilige Kupplungsstück umfasst vorzugsweise mehrere Rastkugeln, welche das jeweilige Gegenkupplungsstück automatisch am Kupplungsstück verriegeln, wenn ein jeweiliges Gegenkupplungsstück in das Kupplungsstück eingesteckt wird.

Auch an Enden der weiteren Leimschläuche, welche ausgehend von einem jeweiligen Sprühkopf zum Kupplungssystem führen, sind Gegenkupplungsstücke befestigt, die jeweils als Stecker ausgebildet sein können. Ebenso werden die Gegenkupplungsstücke in das Kupplungsstück eingesteckt, so dass ein jeweiliges Gegenkupplungsstück fest mit einem jeweiligen Kupplungsstück verbunden ist.

Wenn sowohl die Gegenkupplungsstücke, welche an den Leimschläuchen befestigt sind, als auch die Gegenkupplungsstücke, welche an den weiteren Leimschläuchen befestigt sind, in die Kupplungskörper eingesteckt worden sind, stehen die Leimschläuche mit den weiteren Leimschläuchen fluidisch in Verbindung. Somit kann Leim von den Leimschläuchen über die Kupplungsstücke und die Gegenkupplungsstücke zu den weiteren Leimschläuchen gefördert werden.

Jedem Leimschlauch und jedem weiteren Leimschlauch kann insbesondere jeweils ein Heizanschluss zugeordnet sein. Durch eine elektrische Kontaktierung des jeweiligen Heizanschlusses kann ein Heizelement mit elektrischer Energie versorgt werden, wozu ggf. elektrische Leitungen durch den jeweiligen Leimschlauch verlaufen können. Durch ein jeweiliges Heizelement kann Leim mit Temperatur beaufschlagt werden, so dass in dem weiteren Leimschläuchen Leim als Heißleim gefördert wird. Hierzu werden die Kupplungsstücke vorzugsweise über die Heizelemente erwärmt.

Der Kupplungssystem umfasst weiterhin ein Gehäuse, das in vorteilhafter Variante aus zwei Teilen gebildet sein kann. Die zuvor erwähnten Heizelemente können von außen unzugänglich innerhalb des Gehäuses angeordnet sein, wenn die zwei Teile (oder wahlweise mehr Teile) zusammengefügt sind. Ebenso können die Kupplungsstücke vorzugsweise von außen unzugänglich in dem Gehäuse angeordnet sein, wenn die zwei oder mehr Teile zusammengefügt sind. Vorteilhafterweise lässt sich hierdurch ein Risiko ausschließen, dass Heizelemente oder erwärmte Kupplungsstücke ungewollt von einem Benutzer kontaktiert werden und sich hierdurch ein Benutzer ggf. verletzt.

Der erste Teil des Gehäuses kann bspw. zwei Öffnungen sowie zwei Schlitze umfassen. Wenn die beiden Teile zusammengefügt werden und das Gehäuse hierdurch geschlossen wird, werden Vorsprünge des zweiten Teils durch die Schlitze gesteckt. Weiter kann eine Lasche einer seitlichen Gehäusewand des ersten Teils in einen Durchbruch des zweiten Teils eingefügt werden. Der Verschluss des Gehäuses bzw. das Festsetzen der beiden Teile aneinander erfolgt bspw. über einen geeigneten Schließmechanismus oder Rastmechanismus o. dgl.

Bei einem Zusammenfügen der beiden Teile können zudem Halteringe in Öffnungen des ersten Teils positioniert werden. Die Halteringe sind vorzugsweise Bestandteil der Gegenkupplungsstücke, welche an den Leimschläuchen befestigt sind. Wenn sich die Halteringe in den Öffnungen des ersten Gehäuseteils befinden, werden die Gegenkupplungsstücke zudem über die Halteringe am ersten Teil gehalten.

Mit den Kupplungsstücken können mehrere Gegenkupplungsstücke, die über weitere Schlauchverbindungen zu Sprühköpfen einer Etikettiervorrichtung führen, selektiv verbunden werden. Sofern auf einen bisher nicht benötigten Sprühkopf gewechselt werden soll, wird ein Gegenkupplungsstück, das an einer weiteren Schlauchverbindung eines nun benötigten Sprühkopfes angeordnet ist, in ein Kupplungsstück gesteckt. Ein einziges Leimgerät kann somit eine Vielzahl an unterschiedlichen Sprühköpfen mit Leim versorgen, wozu selektiv eine fluidische Verbindung zwischen dem jeweiligen Sprühkopf und dem Leimgerät über das Kupplungssystem hergestellt wird.

Bei den Gegenkupplungsstücken kann es sich wiederum um Stecker handeln, die automatisch an einem jeweiligen Kupplungsstück verriegelt werden, wenn ein jeweiliger Stecker in das jeweilige Kupplungsstück eingesteckt wird. Wird die jeweilige Verriegelung aufgehoben, so kann das jeweilige Gegenkupplungsstück zusammen mit dem jeweiligen weiteren Leimschlauch und dem hieran befestigten Sprühkopf vom jeweiligen Kupplungsstück abgenommen und einer Wartung zugeführt werden oder in ein Lager oder einen Speicher verbracht werden.

Die Kupplungsstücke, welche zum Erwärmen des Leims eine hohe Temperatur besitzen, sind gemäß der vorherigen Beschreibung über das Gehäuse von außen unzugänglich aufgenommen. Um das Risiko einer Verletzung weiter zu reduzieren, hat es sich bewährt, wenn auch Anschlussstellen der Kupplungsstücke, die zum Einstecken eines Steckers von außen kontaktierbar sind, über eine thermische Isolierung verfügen.

Bei dem hier beschriebenen Ausführungsbeispiel umfasst das Kupplungssystem genau zwei Kupplungsstücke. Es ist jedoch auch denkbar, dass ein Kupplungssystem in diversen Ausführungsformen genau ein solches Kupplungsstück umfasst oder dass ein Kupplungssystem in diversen Ausführungsformen mehr als zwei Kupplungsstücke umfasst.

Es sei zudem darauf hingewiesen, dass die eingesetzten Leimschläuche oder die weiteren Leimschläuche unterschiedliche Querschnittsdurchmesser besitzen, wobei sich die Durchmesser nach dem jeweiligen Förderbedarf an Leim richten können.

Wenn ein Kupplungssystem als Bestandteil einer Beleimungsmaschine ausgebildet ist, kann es hierbei sein, dass die Beleimungsmaschine genau ein solches Kupplungssystem umfasst. Auch kann es sein, dass eine Beleimungsmaschine mehrere solche Kupplungssysteme umfasst.

Das Kupplungssystem kann weiterhin den erwähnten Schließmechanismus umfassen, der den ersten Teil und den zweiten Teil verriegeln kann, wenn der erste Teil und der zweite Teil zusammengefügt sind. Der Schließmechanismus kann bspw. als Bolzen-Zylindereinheit ausgebildet sein, der mit einer Steuereinrichtung in Verbindung steht, welche den Schließmechanismus zum Verriegeln der beiden Teile betätigen kann. Wenn der erste Teil und der zweite Teil zusammengefügt sind und das Gehäuse geschlossen ist, sind innerhalb des Gehäuses die Kupplungsstücke, die bereits beschriebenen Heizelemente und Temperatursensoren angeordnet. Über die Temperatursensoren kann die Steuereinrichtung eine jeweilige Ist-Temperatur der Kupplungsstücke feststellen.

Der Schließmechanismus wird über die Steuereinrichtung vorzugsweise nur dann geöffnet, wenn sich die jeweils festgestellte Ist-Temperatur innerhalb einer vorgegebenen Soll-Temperatur befindet. Hierdurch kann ausgeschlossen werden, dass die Kupplungsstücke unbeabsichtigt kontaktiert werden, wenn diese eine hohe Temperatur besitzen. Es besteht somit kein Verletzungsrisiko, da die Steuereinrichtung die jeweilige Ist-Temperatur der Kupplungsstücke über die Temperatursensoren feststellen kann und eine Freigabe zum Öffnen des Gehäuses über den Schließmechanismus lediglich dann veranlasst, wenn sich die jeweilige festgestellte Ist-Temperatur innerhalb der vorgegebenen Soll-Temperatur befindet.

Eine Beleimungsmaschine, die ein Kupplungssystem umfassen kann, besitzt in der Regel noch weitere Sensoren, die mit der Steuereinrichtung in Verbindung stehen und sicherheitsrelevanten Aspekten dienen. So kann es ein, dass eine Beleimungsmaschine mindestens einen Sicherheitssensor umfasst, der erkennen kann, wenn sich eine Person in einer Sicherheitszone befindet, in der auch das Kupplungssystem angeordnet ist. Ein Leimgerät bzw. eine Leimpumpe der Beleimungsmaschine kann zudem mit der Steuereinrichtung in Verbindung stehen.

Sofern die Steuereinrichtung über einen solchen Sicherheitssensor eine Präsenz einer Person in der Sicherheitszone erkennt, kann die Steuereinrichtung das Leimgerät automatisch drucklos schalten, wodurch kein Leim über die Leimschläuche in das Kupplungssystem gepumpt wird. Hierdurch wird ein Risiko ausgeschlossen, wonach bei Trennen der Gegenkupplungsstücke von den Kupplungskörpern Heißleim druckbeaufschlagt aus dem jeweiligen Leimschlauch austreten könnte und durch seine Temperatur einen Benutzer verletzt.

Bei dem Sicherheitssensor kann es sich beispielsweise um eine Kamera handeln, deren Erfassungsbereich sich auf die Sicherheitszone erstreckt. Auch kann es sich bei dem Sicherheitssensor um einen Tastsensor handeln, der ein Öffnen einer Türe erkennt, über die ein Benutzer in die Sicherheitszone gelangen kann. Darüber hinaus exisiteren weitere Sicherheitssensoren, die dem Fachmann bekannt sind und daher nicht vollständig aufgezählt bzw. erwähnt werden.

Wenn das Gehäuse geschlossen und über den Schließmechanismus verriegelt ist, kann vorgesehen sein, dass ein als Bestandteil des Schließmechanismus ausgebildeter Bolzen durch eine Öffnung der Lasche des ersten Teils hindurchgreift. Hierdurch können die Teile, welche das Gehäuse bilden, nicht mehr voneinander getrennt werden.

Sofern ein Benutzer auf die Kupplungsstücke, welche sich im Gehäuse befinden, zugreifen möchte, muss der Bolzen aus der Öffnung zurückgezogen werden, wonach ein Trennen der beiden Teile möglich ist. Die Steuereinrichtung steht sowohl mit dem Schließmechanismus als auch mit den Temperatursensoren, welche im Gehäuse angeordnet sind, in Verbindung. Die Steuereinrichtung veranlasst eine Rückzugsbewegung des Bolzens aus der Öffnung, wenn die über die Temperatursensoren festgestellte jeweilige Temperatur von erwärmten Kupplungsstücken so weit gesunken ist, dass diese eine vorgegebene Soll-Temperatur erreicht haben, bei welcher eine Verletzung eines Benutzers ausgeschlossen werden kann.

Die erfindungsgemäße Beleimungsmaschine kann Bestandteil eines Packers sein. Ein solcher Packer kann insbesondere eine Zuführung aufweisen, über die mehrere Stapel mit jeweils mehreren Umverpackungen transportiert werden. Von der Zuführung werden die Umverpackungen vom jeweiligen Stapel abgenommen und bspw. an einen Puffer übergeben, der die Umverpackungen zwischenspeichert, bis diese zur Verpackung von Getränkebehältern benötigt werden.

Ein Manipulator kann dafür vorgesehen sein, die einzelnen Umverpackungen auf einer Horizontalfördereinrichtung zu positionieren, welche die Umverpackungen in einer definierten Transportrichtung bewegt. Bei den Umverpackungen kann es sich beispielsweise um Kartonagen handeln, mit denen jeweils mehrere Getränkebehälter verpackt werden. Im Verlauf des Transportes in der definierten Transportrichtung bringt bspw. ein Leimauftragsformatteil, bei dem es sich um einen Sprühkopf handeln kann, Leim auf eine Lasche einer jeweiligen Umverpackung auf. Nachfolgend wird die jeweilige Lasche eingeschlagen, wodurch die jeweilige Umverpackung verschlossen wird. Der aufgebrachte Leimauftrag hält die Lasche sodann in der eingeschlagenen Position.

Die Beleimungsmaschine, welche zum Aufbringen des Leimauftrages vorgesehen ist, umfasst ein Kupplungssystem, das ein Gehäuse besitzt und ein Kupplungsstück umfasst, das sich innerhalb des Gehäuses befindet. Das Leimgerät der Beleimungsmaschine steht über eine Schlauchverbindung mit dem Kupplungsstück des Kupplungssystems fluidisch in Verbindung.

Die Beleimungsmaschine kann bspw. zwei unterschiedliche Leimauftragsformatteile umfassen, bei denen es sich um Sprühköpfe handeln kann. In Abhängigkeit vom jeweiligen zum Aufbringen von Leim vorgesehenen Applikationsprozess kann es notwendig sein, dass Leim entweder über das Leimauftragsformatteil oder über das Leimauftragsformatteil auf eine Lasche der Umverpackung aufgebracht wird.

Das Leimauftragsformatteil kann insbesondere mit dem Kupplungsstück des Kupplungssystems gekoppelt sein, wozu ein als Stecker ausgebildetes Gegenkupplungsstück in das Kupplungsstück eingesteckt wurde, der mit dem weiteren Leimschlauch des Leimauftragsformatteils in Verbindung steht. Das bereits eingesteckte Gegenkupplungsstück kann jedoch vom Kupplungsstück gelöst werden, so dass alternativ hierzu auch das Leimauftragsformatteil über ein jeweiliges Gegenkupplungsstück, das mit dem Leimschlauch verbunden ist, in das Kupplungsstück eingesteckt werden kann.

Somit können über das Kupplungssystem die Leimauftragsformatteile wahlweise an das Leimgerät gekoppelt werden, um eines von mehreren Leimauftragsformatteilen über das Leimgerät mit Leim zu versorgen. Weitere Leimgeräte sind somit nicht zwingend notwendig, um für mehrere Leimauftragsformatteile Leim bereitstellen zu können.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Perspektivansicht einer Ausführungsform eines erfindungsgemäßen Kupplungssystems und verdeutlicht Schritte, wie sie in diversen Ausführungsformen des erfindungsgemäßen Verfahrens vorgesehen sein können.
Fig. 2 zeigt die Ausführungsform eines Kupplungssystems nach Fig. 1 unter Verdeutlichung weiterer Aspekte.
Fig. 3 zeigt die Ausführungsform eines Kupplungssystems nach Figuren 1 und 2 mit geschlossenem und verriegeltem Gehäuse.
Fig. 4 zeigt die Ausführungsform eines Kupplungssystems nach Figuren 1 bis 3 mit geschlossenem Gehäuse aus einer weiteren Position.
Fig. 5 zeigt eine Ausführungsform eines Packers mit einer Ausführungsform einer erfindungsgemäßen Beleimungsmaschine.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

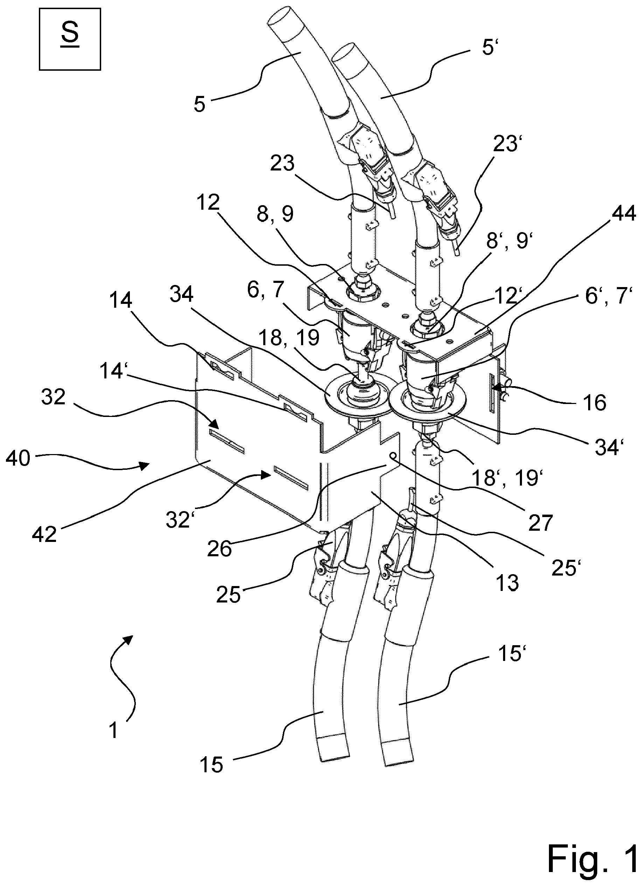

Die Fig. 1 zeigt eine schematische Perspektivansicht einer Ausführungsform eines erfindungsgemäßen Kupplungssystems 1 und verdeutlicht Schritte, wie sie in diversen Ausführungsformen des erfindungsgemäßen Verfahrens vorgesehen sein können.

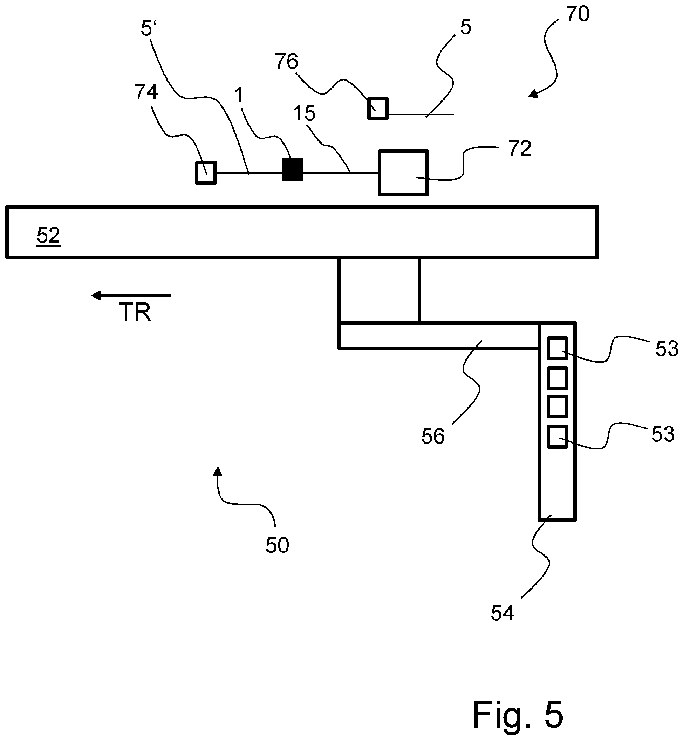

Um Leimauftragsformatteile 74 und 76 (vgl. Fig. 5), welche beispielsweise durch Sprühköpfe ausgebildet sein können, mit Leim zu versorgen, ist bei aus dem Stand der Technik bekannten Vorrichtungen vorgesehen, dass die entsprechenden Leimauftragsformatteile 74 bzw. 76 durch Schlauchverbindungen fest mit einem Leimgerät 72 verbunden werden.

In Abhängigkeit des jeweiligen Auftragungsvorgangs kann es erforderlich sein, dass unterschiedliche Leimauftragsformatteile 74 bzw. 76 bzw. unterschiedliche Sprühköpfe notwendig sind, die an den jeweiligen Auftragsvorgang angepasst sind und je nach Applikationsvorgang über ein Leimgerät 72 mit Leim versorgt werden. Aus diesem Grunde werden in der Praxis häufig mehrere Leimgeräte 72 bereitgehalten, die mit einer Vielzahl unterschiedlicher Sprühköpfe fest verbunden sind, um zwischen unterschiedlichen Sprühköpfen wechseln zu können.

Beleimungsmaschinen, welche mehrere Leimgeräte 72 für die Versorgung einer Vielzahl an Sprühköpfen mit Leim umfassen, besitzen einen hohen Platzbedarf. Mit dem Kupplungssystem 1, wie es in dem Ausführungsbeispiel nach Figuren 1 bis 4 beschrieben ist und in Fig. 5 als Bestandteil eines Packers 50 gezeigt wird, besteht ein geringerer Platzbedarf, wenn unterschiedliche Sprühköpfe für unterschiedliche Applikationsvorgänge benötigt werden. Zudem wird eine geringere Anzahl an Leimgeräten 72 benötigt, so dass mittels des Kupplungssystems 1 auch eine ökonomisch vorteilhafte Ausführungsform einer Beleimungsmaschine 70 bereitgestellt werden kann.

Mit dem Kupplungssystem 1 können die Leimschläuche 5 und 5` mit den weiteren Leimschläuchen 15 und 15' fluidisch verbunden werden. Die Leimschläuche 15 und 15' führen vom Kupplungssystem 1 zu einem Leimgerät 72 (vgl. Fig. 5) bzw. zu einer Leimpumpe und sind fest mit dem Leimgerät 72 bzw. mit der Leimpumpe verbunden. Ein solches Leimgerät kann über mehrere Ausgänge für Leim verfügen, so dass durch die beiden Leimschläuche 15 und 15' über ein gemeinsames Leimgerät 72 bzw. über eine gemeinsame Leimpumpe jeweils Leim gepumpt werden kann. Vorliegend sind die beiden Leimschläuche 15 und 15' jeweils fluidisch an ein gemeinsames Leimgerät 72 bzw. an eine gemeinsame Leimpumpe gekoppelt.

Die weiteren Leimschläuche 5 und 5' führen ausgehend vom Kupplungssystem 1 jeweils zu einem Leimauftragsformatteil 74 bzw. 76 (vgl. Fig. 5), das in den Figuren 1 bis 4 aus Gründen der Übersichtlichkeit jeweils nicht mit dargestellt wurde. Bei den Leimauftragsformatteilen kann es sich beispielsweise um Sprühköpfe einer Etikettiervorrichtung handeln kann. Jedem Sprühkopf bzw. jedem Leimauftragsformatteil ist ein eigener weiterer Leimschlauch 5 bzw. 5' zugeordnet, über den der jeweilige Sprühkopf bzw. über den das jeweilige Leimauftragsformatteil mit Leim versorgt wird.

Um eine fluidische Verbindung zwischen den Leimschläuchen 15 und 15' und den weiteren Leimschläuchen 5 und 5' herstellen zu können, umfasst das Kupplungssystem 1 zwei Kupplungsstücke 6 und 6', die als Kupplungskörper 7 und 7' ausgebildet sind. An einem Endbereich ist an den Leimschläuchen 15 und 15', die ausgehend von einem Leimgerät 72 bzw. einer Leimpumpe zum Kupplungssystem 1 führen, jeweils ein Gegenkupplungsstück 18 bzw. 18' angebracht, welches jeweilige Gegenkupplungsstück 18 bzw. 18' als Stecker 19 bzw. 19' ausgebildet ist.

Die Gegenkupplungsstücke 18 bzw. 18' werden in die Kupplungsstücke 6 bzw. 6' eingesteckt, so dass ein jeweiliges Gegenkupplungsstück 18 bzw. 18' fest mit einem jeweiligen Kupplungsstück 6 bzw. 6' verbunden ist. Das jeweilige Kupplungsstück 6 bzw. 6' umfasst mehrere Rastkugeln, welche das jeweilige Gegenkupplungsstück 18 bzw. 18' automatisch am Kupplungsstück 6 bzw. 6' verriegeln, wenn ein jeweiliges Gegenkupplungsstück 18 bzw. 18' in das Kupplungsstück 6 bzw. 6` eingesteckt wird.

Auch an Enden der weiteren Leimschläuchen 5 bzw. 5', welche ausgehend von einem jeweiligen Sprühkopf zum Kupplungssystem 1 führen, sind Gegenkupplungsstücke 8 bzw. 8' befestigt, die jeweils als Stecker 9 bzw. 9' ausgebildet sind. Ebenso werden die Gegenkupplungsstücke 8 bzw. 8' in das Kupplungsstück 6 eingesteckt, so dass ein jeweiliges Gegenkupplungsstück 8 bzw. 8' fest mit einem jeweiligen Kupplungsstück 6 bzw. 6' verbunden ist.

Wenn sowohl die Gegenkupplungsstücke 18 und 18', welche an den Leimschläuchen 15 und 15' befestigt sind, als auch die Gegenkupplungsstücke 8 und 8', welche an den weiteren Leimschläuchen 5 und 5' befestigt sind, in die Kupplungskörper 6 und 6' eingesteckt worden sind, stehen die Leimschläuche 15 und 15' mit den weiteren Leimschläuchen 5 und 5` fluidisch in Verbindung. Somit kann Leim von den Leimschläuchen 15 und 15' über die Kupplungsstücke 6 und 6' und die Gegenkupplungsstücke 8 und 8' bzw. 18 und 18' zu den weiteren Leimschläuchen 5 und 5` gefördert werden.

Jedem Leimschlauch 15 und 15' und jedem weiteren Leimschlauch 5 und 5` ist ein Heizanschluss 23 und 23' bzw. 25 und 25' zugeordnet. Durch eine elektrische Kontaktierung des jeweiligen Heizanschlusses 23 und 23' bzw. 25 und 25' kann ein Heizelement mit elektrischer Energie versorgt werden, wozu ggf. elektrische Leitungen durch den jeweiligen Leimschlauch 5 und 5' bzw. 15 und 15' verlaufen können. Durch ein jeweiliges Heizelement kann Leim mit Temperatur beaufschlagt werden, so dass in dem weiteren Leimschläuchen 5 und 5' Leim als Heißleim gefördert wird. Hierzu werden die Kupplungsstücke 6 und 6' über die Heizelemente erwärmt.

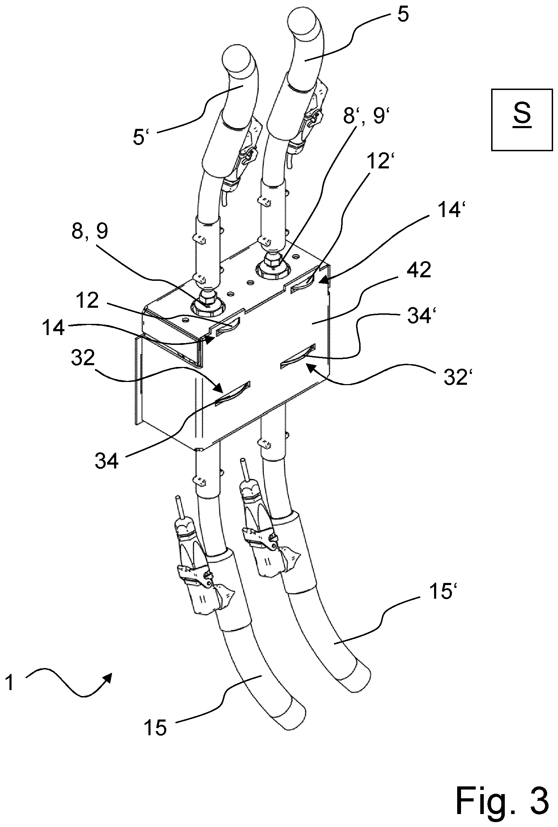

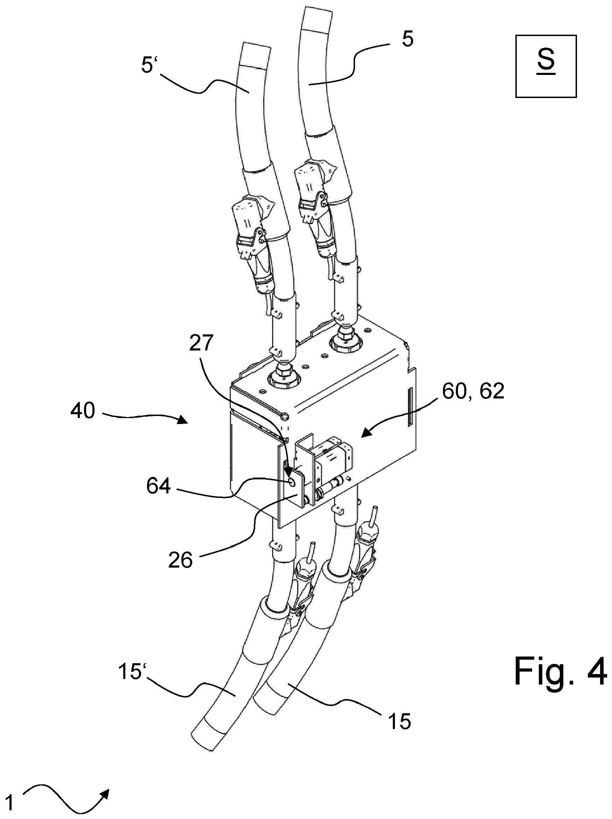

Der Kupplungssystem 1 umfasst ein Gehäuse 40, das aus zwei Teilen 42 und 44 gebildet ist. Die vorherig erwähnten Heizelemente können von außen unzugänglich innerhalb des Gehäuses 40 angeordnet sein, wenn die zwei Teile 42 und 44 zusammengefügt sind, wie dies in den Figuren 3 und 4 zu erkennen ist. Ebenso sind die Kupplungsstücke 6 und 6' von außen unzugänglich in dem Gehäuse 40 angeordnet, wenn die zwei Teile 42 und 44 zusammengefügt sind. Vorteilhafterweise lässt sich hierdurch ein Risiko ausschließen, dass Heizelemente oder erwärmte Kupplungsstücke 6 und 6' ungewollt von einem Benutzer kontaktiert werden und sich hierdurch ein Benutzer ggf. verletzt.

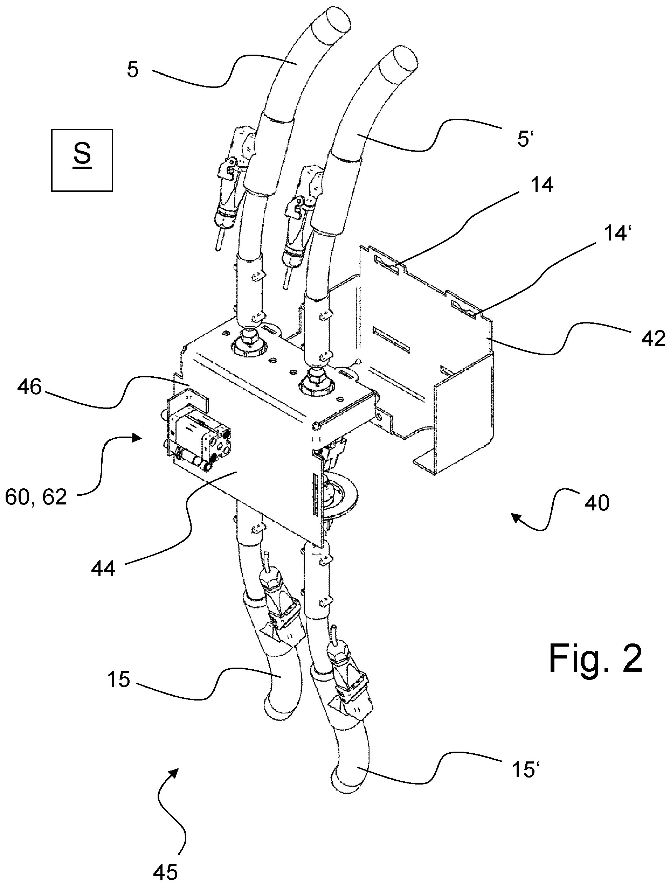

Der erste Teil 42 des Gehäuses 40 umfasst zwei Öffnungen 32 und 32` sowie zwei Schlitze 14 und 14' Wenn die beiden Teile 42 und 44 zusammengefügt werden und das Gehäuse 40 hierdurch geschlossen wird, werden Vorsprünge 12 und 12' des zweiten Teils 44 durch die Schlitze 14 und 14' gesteckt. Weiter wird eine Lasche 26 einer seitlichen Gehäusewänd 13 des ersten Teils 42 in einen Durchbruch 16 des zweiten Teils 44 gesteckt. Der Verschluss des Gehäuses 42 bzw. das Festsetzen der beiden Teile 42 und 44 aneinander erfolgt über einen Schließmechanismus 60, der in Fig. 2 gezeigt ist und nachfolgend noch beschrieben wird.

Bei einem Zusammenfügen der beiden Teile 42 und 44 werden zudem Halteringe 34 und 34` in Öffnungen 32 und 32` des ersten Teils 42 positioniert. Die Halteringe 34 und 34` sind Bestandteil der Gegenkupplungsstücke 18 und 18', welche an den Leimschläuchen 15 und 15' befestigt sind. Wenn sich die Halteringe 34 und 34' in den Öffnungen 32 und 32' des ersten Teils 42 befinden, werden die Gegenkupplungsstücke 18 und 18' zudem über die Halteringe 34 und 34' am ersten Teil 42 gehalten.

Mit den Kupplungsstücken 6 und 6` können mehrere Gegenkupplungsstücke 8 und 8', die über weitere Schlauchverbindungen 5 und 5' zu Sprühköpfen einer Etikettiervorrichtung führen, selektiv verbunden werden. Sofern auf einen bisher nicht benötigten Sprühkopf gewechselt werden soll, wird ein Gegenkupplungsstück 8 bzw. 8', das an einer weiteren Schlauchverbindung 5 bzw. 5' eines nun benötigten Sprühkopfes angeordnet ist, in ein Kupplungsstück 6 bzw. 6' gesteckt. Ein einziges Leimgerät 72 kann somit eine Vielzahl an unterschiedlichen Sprühköpfen mit Leim versorgen, wozu selektiv eine fluidische Verbindung zwischen dem jeweiligen Sprühkopf und dem Leimgerät 72 über das Kupplungssystem 1 hergestellt wird.

Bei den Gegenkupplungsstücken 8 und 8' handelt es sich wiederum um Stecker 9 und 9', die automatisch an einem jeweiligen Kupplungsstück 6 und 6' verriegelt werden, wenn ein jeweiliger Stecker 9 bzw. 9' in das jeweilige Kupplungsstück 6 bzw. 6' eingesteckt wird. Wird die jeweilige Verriegelung aufgehoben, so kann das jeweilige Gegenkupplungsstück 8 bzw. 8' zusammen mit dem jeweiligen weiteren Leimschlauch 5 bzw. 5' und dem hieran befestigten Sprühkopf vom jeweiligen Kupplungsstück 6 bzw. 6' abgenommen und einer Wartung zugeführt werden oder in ein Lager oder einen Speicher verbracht werden.

Die Kupplungsstücke 6 und 6', welche zum Erwärmen des Leims eine hohe Temperatur besitzen, sind gemäß der vorherigen Beschreibung über das Gehäuse 40 von außen unzugänglich aufgenommen. Um das Risiko einer Verletzung weiter zu reduzieren, hat es sich bewährt, wenn auch Anschlussstellen der Kupplungsstücke 6 und 6', die zum Einstecken eines Steckers 9 bzw. 9' von außen kontaktierbar sind, über eine thermische Isolierung verfügen.

Bei dem Ausführungsbeispiel nach Figuren 1 bis 4 umfasst das Kupplungssystem 1 genau zwei Kupplungsstücke 6 und 6'. Es ist jedoch auch denkbar, dass ein Kupplungssystem 1 in diversen Ausführungsformen genau ein solches Kupplungsstück 6 bzw. 6' umfasst oder dass ein Kupplungssystem 1 in diversen Ausführungsformen mehr als zwei Kupplungsstücke 6 bzw. 6' umfasst.

Auch kann es sein, dass die in Fig. 1 gezeigten Leimschläuche 15 und 15' und/oder die in Fig. 1 gezeigten weiteren Leimschläuche 5 und 5' unterschiedliche Querschnittsdurchmesser besitzen.

Wenn ein Kupplungssystem 1 als Bestandteil einer Beleimungsmaschine 70 ausgebildet ist (vgl. Fig. 5), kann es hierbei sein, dass die Beleimungsmaschine 70 genau ein solches Kupplungssystem 1 umfasst. Auch kann es sein, dass eine Beleimungsmaschine 70 mehrere solche Kupplungssysteme 1 umfasst.

Die Fig. 2 zeigt die Ausführungsform eines Kupplungssystems 1 nach Fig. 1 unter Verdeutlichung weiterer Aspekte. In Fig. 2 ist hierbei insbesondere der Schließmechanismus 60 zu erkennen, der den ersten Teil 42 und den zweiten Teil 44 verriegeln kann, wenn der erste Teil 42 und der zweite Teil 44 zusammengefügt sind, wie dies in Figuren 3 und 4 gezeigt wird. In Fig. 2 sind der erste Teil 42 und der zweite Teil 44 noch voneinander getrennt.

Der Schließmechanismus 60 ist in der gezeigten Ausführungsform als Bolzen-Zylindereinheit 62 ausgebildet und steht mit der Steuereinrichtung S in Verbindung, welche den Schließmechanismus 60 zum Verriegeln der beiden Teile 42 und 44 betätigen kann. Wenn der erste Teil 42 und der zweite Teil 44 zusammengefügt sind und das Gehäuse 40 geschlossen ist, sind innerhalb des Gehäuses 40 die Kupplungsstücke 6 und 6', die bereits beschriebenen Heizelemente und Temperatursensoren angeordnet. Über die Temperatursensoren kann die Steuereinrichtung S eine jeweilige Ist-Temperatur der Kupplungsstücke 6 und 6' feststellen.

Der Schließmechanismus 60 wird über die Steuereinrichtung S lediglich dann geöffnet, wenn sich die jeweils festgestellte Ist-Temperatur innerhalb einer vorgegebenen Soll-Temperatur befindet. Hierdurch kann ausgeschlossen werden, dass die Kupplungsstücke 6 bzw. 6' unbeabsichtigt kontaktiert werden, wenn diese eine hohe Temperatur besitzen. Es besteht somit kein Verletzungsrisiko, da die Steuereinrichtung S die jeweilige Ist-Temperatur der Kupplungsstücke 6 bzw. 6' über die Temperatursensoren feststellen kann und eine Freigabe zum Öffnen des Gehäuses 40 über den Schließmechanismus 60 lediglich dann veranlasst, wenn sich die jeweilige festgestellte Ist-Temperatur innerhalb der vorgegebenen Soll-Temperatur befindet.

Eine Beleimungsmaschine 70 (vgl. Fig. 5), die ein Kupplungssystem 1 gemäß der Ausführungsform nach Figuren 1 bis 4 umfassen kann, besitzt in der Regel noch weitere Sensoren, die mit der Steuereinrichtung S in Verbindung stehen und sicherheitsrelevanten Aspekten dienen. So kann es ein, dass eine Beleimungsmaschine 70 mindestens einen Sicherheitssensor umfasst, der erkennen kann, wenn sich eine Person in einer Sicherheitszone befindet, in der auch das Kupplungssystem 1 angeordnet ist. Ein Leimgerät 72 bzw. eine Leimpumpe der Beleimungsmaschine 70 kann mit der Steuereinrichtung S in Verbindung stehen.

Sofern die Steuereinrichtung S über einen solchen Sicherheitssensor eine Präsenz einer Person in der Sicherheitszone erkennt, kann die Steuereinrichtung S das Leimgerät 72 automatisch drucklos schalten, wodurch kein Leim über die Leimschläuche 5 in das Kupplungssystem 1 gepumpt wird. Hierdurch wird ein Risiko ausgeschlossen, wonach bei Trennen der Gegenkupplungsstücke 8 und 8' bzw. 18 und 18' von den Kupplungskörpern 6 und 6` Heißleim druckbeaufschlagt aus dem jeweiligen Leimschlauch 5 bzw. 5 oder 15 bzw. 15' austreten könnte und durch seine Temperatur einen Benutzer verletzt.

Bei dem Sicherheitssensor kann es sich beispielsweise um eine Kamera handeln, deren Erfassungsbereich sich auf die Sicherheitszone erstreckt. Auch kann es sich bei dem Sicherheitssensor um einen Tastsensor handeln, der ein Öffnen einer Türe erkennt, über die ein Benutzer in die Sicherheitszone gelangen kann. Darüber hinaus exisiteren weitere Sicherheitssensoren, die dem Fachmann bekannt sind und daher nicht vollständig aufgezählt bzw. erwähnt werden.

Die Fig. 3 zeigt die Ausführungsform eines Kupplungssystems 1 nach Figuren 1 und 2 mit geschlossenem und verriegeltem Gehäuse 40. Fig. 3 zeigt eine vordere Ansicht auf das Gehäuse 40, so dass der Schließmechanismus 60, welcher sich im Bereich einer Rückseite des Gehäuses 40 befindet, in Fig. 3 nicht zu erkennen ist.

Wie es Fig. 3 beispielhaft zeigt, sind die Halteringe 34 und 34' nun im ersten Teils 42 des Gehäuses 40 formschlüssig aufgenommen. Wie es bereits erwähnt wurde, sind die Halteringe 34 und 34' Bestandteil der Gegenkupplungsstücke 18 und 18', an denen die Schlauchverbindungen 15 und 15' befestigt sind, die ausgehend vom Kupplungssystem 1 zu einem Leimgerät 72 (vgl. Fig. 5) führen. Auch zeigt Fig. 3 nun, dass die Vorsprünge 12 und 12' des zweiten Teils 44 des Gehäuses 40 in den Schlitzen 14 des ersten Teils 42 positioniert sind, wenn das Gehäuse 40 geschlossen wurde.

Die Fig. 4 zeigt die Ausführungsform des Kupplungssystems 1 von einer Seite, welche der Perspektive nach Fig. 3 gegenüberliegt. In Fig. 4 ist nun insbesondere nochmals der Schließmechanismus 60 zu erkennen, welcher am zweiten Teil 44 des Gehäuses 40 befestigt ist und bei welchem Schließmechanismus 60 es sich um eine Bolzen-Zylindereinheit 62 handelt.

Wenn das Gehäuse 40 geschlossen und über den Schließmechanismus 60 verriegelt ist, greift ein als Bestandteil des Schließmechanismus 60 ausgebildeter Bolzen 64 durch eine Öffnung 27 (vgl. auch Fig. 1) der Lasche 26 des ersten Teils 42 hindurch. Hierdurch können die Teile 42 und 44, welche das Gehäuse 40 bilden, nicht mehr voneinander getrennt werden.

Sofern ein Benutzer auf die Kupplungsstücke 6 und 6', welche sich im Gehäuse 40 befinden, zugreifen möchte, muss der Bolzen 64 aus der Öffnung 27 zurückgezogen werden, wonach ein Trennen der beiden Teile 42 und 44 möglich ist. Die Steuereinrichtung S steht sowohl mit dem Schließmechanismus 60 als auch mit den Temperatursensoren, welche im Gehäuse 40 angeordnet sind, in Verbindung. Die Steuereinrichtung S veranlasst eine Rückzugsbewegung des Bolzens 64 aus der Öffnung 27, wenn die über die Temperatursensoren festgestellte jeweilige Temperatur von erwärmten Kupplungsstücken 6 und 6' so weit gesunken ist, dass diese eine vorgegebene Soll-Temperatur erreicht haben, bei welcher eine Verletzung eines Benutzers ausgeschlossen werden kann.

Die Fig. 5 zeigt eine Ausführungsform eines Packers 50 mit einer Ausführungsform einer erfindungsgemäßen Beleimungsmaschine 70. Ein solcher Packer 50, wie er lediglich beispielhaft in Fig. 5 dargestellt ist, umfasst eine Zuführung 54, über die mehrere Stapel 53 mit jeweils mehreren Umverpackungen transportiert werden. Von der Zuführung 54 werden die Umverpackungen vom jeweiligen Stapel 53 abgenommen und an den Puffer 56 übergeben, der die Umverpackungen zwischenspeichert, bis diese zur Verpackung von Getränkebehältern benötigt werden.

Ein Manipulator positioniert die einzelnen Umverpackungen auf der Horizontalfördereinrichtung 52, welche die Umverpackungen in Transportrichtung TR bewegt. Bei den Umverpackungen kann es sich beispielsweise um Kartonagen handeln, mit denen jeweils mehrere Getränkebehälter verpackt werden. Im Verlauf des Transportes in Transportrichtung TR bringt das in Fig. 5 auf Verweis mit Ziffer 74 dargestellte Leimauftragsformatteil, bei dem es sich um einen Sprühkopf handelt, Leim auf eine Lasche einer jeweiligen Umverpackung auf. Nachfolgend wird die jeweilige Lasche eingeschlagen, wodurch die jeweilige Umverpackung verschlossen wird. Der aufgebrachte Leimauftrag hält die Lasche sodann in der eingeschlagenen Position.

Die Beleimungsmaschine 70, welche zum Aufbringen des Leimauftrages vorgesehen ist, umfasst ein Kupplungssystem 1, das weiterhin ein Fig. 5 nicht dargestelltes Gehäuse 40 (vgl. Figuren 1 bis 4) besitzt und ein Kupplungsstück 6 bzw. 6' umfasst, das sich innerhalb des Gehäuses 40 befindet. Das Leimgerät 72 der Beleimungsmaschine 70 steht über eine Schlauchverbindung 15 mit dem Kupplungsstück 6 bzw. 6` des Kupplungssystems 1 fluidisch in Verbindung.

Die Beleimungsmaschine 70 umfasst vorliegend zwei unterschiedliche Leimauftragsformatteile 74 und 76, bei denen es sich um Sprühköpfe handelt. In Abhängigkeit des jeweiligen zum Aufbringen von Leim vorgesehenen Applikationsprozesses kann es notwendig sein, dass Leim entweder über das Leimauftragsformatteil 76 oder über das Leimauftragsformatteil 74 auf eine Lasche der Umverpackung aufgebracht wird.

Vorliegend ist das Leimauftragsformatteil 74 mit dem Kupplungsstück 6 bzw. 6` des Kupplungssystems 1 gekoppelt, wozu ein als Stecker 9 bzw. 9' ausgebildetes Gegenkupplungsstück 8 bzw. 8' in das Kupplungsstück 6 bzw. 6' eingesteckt wurde, der mit dem weiteren Leimschlauch 5' des Leimauftragsformatteils 74 in Verbindung steht. Das bereits eingesteckte Gegenkupplungsstück 8 bzw. 8' kann jedoch vom Kupplungsstück 6 bzw. 6' gelöst werden, so dass alternativ hierzu auch das Leimauftragsformatteil 76 über ein jeweiliges Gegenkupplungsstück 8 bzw. 8', das mit dem Leimschlauch 5 verbunden ist, in das Kupplungsstück 6 bzw. 6' eingesteckt werden kann.

Somit können über das Kupplungssystem 1 die Leimauftragsformatteile 74 und 76 wahlweise an das Leimgerät 72 gekoppelt werden, um entweder das Leimauftragsformatteil 74 oder das Leimauftragsformatteil 76 über das Leimgerät 72 mit Leim zu versorgen.

Weitere Leimgeräte 72 sind nicht zwingend notwendig, um für mehrere Leimauftragsformatteile 74 und 76 Leim bereitstellen zu können.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Kupplungssystem
- 5: Leimschlauch
- 5`: Leimschlauch
- 6: Kupplungsstück
- 6`: Kupplungsstück
- 7: Kupplungshülse
- 7`: Kupplungshülse
- 12: Vorsprung
- 12': Vorsprung
- 13: seitliche Gehäusewand
- 14: Schlitz
- 14': Schlitz
- 15: weiterer Leimschlauch
- 15': weiterer Leimschlauch
- 16: Durchbruch
- 18: Gegenkupplungsstück
- 18`: Gegenkupplungsstück
- 19: Stecker
- 19`: Stecker
- 23: Heizanschluss
- 23': Heizanschluss
- 25: Heizanschluss
- 25': Heizanschluss
- 26: Laschen
- 27: Öffnung
- 32: Öffnung
- 32`: Öffnung
- 34: Haltering
- 34': Haltering
- 40: Gehäuse
- 42: erster Teil
- 44: zweiter Teil
- 46: hintere Gehäusewand
- 50: Packer
- 52: Horizontalfördereinrichtung
- 54: Zuführung
- 56: Puffer
- 60: Schließmechanismus
- 62: Bolzen-Zylindereinheit
- 70: Beleimungsmaschine
- 72: Leimgerät
- 74: Leimauftragsformatteil
- 76: Leimauftragsformatteil
- 80: Packer

- S: Steuereinrichtung
- TR: Transportrichtung

## Patentansprüche

1. Kupplungssystem (1) zur fluidischen Verbindung von Leimschläuchen (5, 5`, 15, 15') umfassend
- ein Gehäuse (40) sowie
- mindestens ein an einem Leimschlauch (15, 15') eines Leimgeräts (72) befestigbares Kupplungsstück (6, 6'), welches durch das Gehäuse (40) aufgenommen ist und welches selektiv und lösbar mit Gegenkupplungsstücken (8, 8') mehrerer weiterer Leimschläuche (5, 5') unterschiedlicher Leimauftragsformatteile (74, 76) jeweils koppelbar ist, so dass zwischen dem jeweiligen Leimschlauch (15, 15') des Leimgeräts (72) und dem jeweiligen weiteren Leimschlauch (5, 5') des jeweiligen Leimauftragsformatteils (74, 76) über das Kupplungsstück (6, 6') und das mit dem Kupplungsstück (6, 6') gekoppelte Gegenkupplungsstück (8, 8') eine fluidische Verbindung ausgebildet ist.

2. Kupplungssystem (1) nach Anspruch 1, bei welchem das mindestens eine Kupplungsstück (6, 6') einen Kupplungskörper ausbildet, in welchen zur jeweiligen Koppelung ein jeweiliges als Stecker (9, 9`) ausgebildetes Gegenkupplungsstück (8, 8') einsteckbar ist.

3. Kupplungssystem (1) nach Anspruch 2, bei welchem das mindestens eine Kupplungsstück (6, 6') derart ausgebildet ist, dass das mindestens eine Kupplungsstück (6, 6') das jeweilige als Stecker (9, 9`) ausgebildete Gegenkupplungsstück (8, 8') bei Einstecken in den Kupplungskörper automatisch verriegelt.

4. Kupplungssystem (1) nach einem der Ansprüche 1 bis 3, umfassend mindestens ein Heizelement zur Temperierung des mindestens einen Kupplungsstücks (6, 6'), wobei das mindestens eine Heizelement im Gehäuse (40) aufgenommen ist.

5. Kupplungssystem (1) nach einem der Ansprüche 1 bis 4, bei welchem das Gehäuse (40) aus wenigstens zwei korrespondierenden Teilen (42, 44) gebildet ist, die das mindestens eine Kupplungsstück (6, 6') von außen unzugänglich aufnehmen, wenn die wenigstens zwei korrespondierenden Teile (42, 44) zusammengefügt sind und welche derart trennbar sind, dass durch das Trennen der wenigstens zwei korrespondierenden Teile (42, 44) auf das mindestens eine Kupplungsstück (6, 6') zugegriffen werden kann.

6. Kupplungssystem (1) nach Anspruch 5, umfassend einen Schließmechanismus (60) zum Verriegeln der wenigstens zwei korrespondierenden Teile (42, 44), wenn diese zusammengefügt sind, wobei der Schließmechanismus (60) zum Aufheben der Verrieglung betätigbar ist.

7. Kupplungssystem nach Anspruch 6, wobei es sich bei dem Schließmechanismus (60) um eine Bolzen-Zylindereinheit (62) handelt.

8. Beleimungsmaschine (70), umfassend
- wenigstens ein Leimgerät (72) mit mindestens einem Leimschlauch (15, 15') und
- mehrere Leimauftragsformatteile (74, 76) mit einem jeweiligen weiteren Leimschlauch (5, 5'), welche mehreren Leimauftragsformatteile (74, 76) jeweils zum Abgeben von Leim ausgebildet sind, **dadurch gekennzeichnet, dass** die Beleimungsmaschine (70) mindestens ein Kupplungssystem (1) mit einem Gehäuse (40) und mindestens einem Kupplungsstück (6, 6') umfasst, welches mindestens eine Kupplungsstück (6, 6') durch das Gehäuse (40) aufgenommen ist und mit dem mindestens einen Leimschlauch (15, 15') des wenigstens einen Leimgeräts (72) fluidisch verbunden ist, wobei die mehreren weiteren Leimschläuche (5, 5') der mehreren Leimauftragsformatteile (72, 74) jeweils ein Gegenkupplungsstück (8, 8') umfassen und wobei das mindestens eine Kupplungsstück (6, 6') selektiv und lösbar mit den Gegenkupplungsstücken (8, 8') der weiteren Leimschläuche (5, 5') jeweils koppelbar ist, so dass zwischen dem jeweiligen Leimschlauch (15, 15') des Leimgeräts (72) und dem jeweiligen weiteren Leimschlauch (5, 5') des jeweiligen Leimauftragsformatteils (72, 74) über das Kupplungsstück (6, 6') und das mit dem Kupplungsstück (6, 6') jeweils gekoppelte Gegenkupplungsstück (8, 8') eine fluidische Verbindung ausgebildet ist.

9. Beleimungsmaschine (70) nach Anspruch 8, bei welcher das mindestens eine Kupplungsstück (6, 6') einen Kupplungskörper ausbildet und die Gegenkupplungsstücke (6, 6') jeweils als Stecker (9, 9') ausgebildet sind, die zur jeweiligen Koppelung mit dem Kupplungskörper jeweils in den Kupplungskörper einsteckbar sind.

10. Beleimungsmaschine (70) nach Anspruch 9, bei welcher das mindestens eine Kupplungsstück (6, 6') derart ausgebildet ist, dass das mindestens eine Kupplungsstück (6, 6') das jeweilige als Stecker (9, 9`) ausgebildete Gegenkupplungsstück (8, 8') bei Einstecken in den Kupplungskörper automatisch verriegelt.

11. Beleimungsmaschine (70) nach einem der Ansprüche 8 bis 10, bei welcher das Kupplungssystem (1) mindestens ein Heizelement zur Temperierung des mindestens einen Kupplungsstücks (6, 6') umfasst, wobei das mindestens eine Heizelement im Gehäuse (40) des Kupplungssystems (1) aufgenommen ist.

12. Beleimungsmaschine (70) nach einem der Ansprüche 8 bis 11, umfassend einen Schließmechanismus (60) zum Verriegeln des Gehäuses (40).

13. Beleimungsmaschine (70) nach Anspruch 12, umfassend mindestens einen Temperatursensor zum Feststellen einer Ist-Temperatur des mindestens einen Kupplungsstücks (6, 6'), wobei der mindestens eine Temperatursensor und der Schließmechanismus (60) miteinander in Wirkverbindung stehen, so dass ein Aufheben einer über den Schließmechanismus (60) hergestellten Verriegelung unterbunden ist, wenn sich die über den Temperatursensor festgestellte jeweilige Ist-Temperatur oberhalb einer vorgegebenen Soll-Temperatur befindet.

14. Beleimungsmaschine (70) nach einem der Ansprüche 8 bis 13, bei welcher das Kupplungssystem (1) innerhalb einer definierten Sicherheitszone der Beleimungsmaschine (70) angeordnet ist und welche Beleimungsmaschine (70) mindestens einen Sicherheitssensor umfasst, über den eine Präsenz einer Person in der Sicherheitszone erkennbar ist, wobei der mindestens eine Sicherheitssensor und das Leimgerät (72) derart miteinander in Wirkverbindung stehen, dass eine Förderung von Leim durch das Leimgerät (72) unterbunden ist, wenn durch den mindestens einen Sicherheitssensor eine Präsenz einer Person in der Sicherheitszone erkannt wird.

15. Etikettiervorrichtung für Getränkebehälter, umfassend eine Beleimungsmaschine (70) nach einem der Ansprüche 8 bis 14 zum Aufbringen von Leim auf Etiketten.

16. Packer (50) für Getränkebehälter, umfassend eine Beleimungsmaschine (70) nach einem der Ansprüche 8 bis 14 zum Aufbringen von Leim auf Umverpackungen.

17. Verfahren zum Betreiben einer Beleimungsmaschine (70), die
- ein Leimgerät (72) mit mindestens einem Leimschlauch (15, 15') sowie
- ein Kupplungssystem (1) mit einem Gehäuse (40) besitzt, in dem sich mindestens ein Kupplungsstück (6, 6') befindet, das an dem mindestens einen Leimschlauch (15, 15') befestigt ist, wobei die Beleimungsmaschine (70) zudem
- mehrere unterschiedliche Leimauftragsformatteile (74, 76) umfasst, die jeweils eine weitere Schlauchverbindung (5, 5') mit einem jeweiligen Gegenkupplungsstück (8, 8') besitzen, wobei das Kupplungsstück (6, 6') selektiv und lösbar mit den Gegenkupplungsstücken (8, 8') jeweils koppelbar ist, so dass zwischen dem jeweiligen Leimschlauch (15, 15') des Leimgeräts (72) und dem jeweiligen weiteren Leimschlauch (5, 5') des jeweiligen Leimauftragsformatteils (74, 76) über das Kupplungsstück (6, 6') und das mit dem Kupplungsstück (6, 6') gekoppelte Gegenkupplungsstück (8, 8') eine fluidische Verbindung ausgebildet wird, das Verfahren umfassend folgende Schritte:
- Auswahl eines bestimmten Leimauftragsformatteils (74, 76) aus den mehreren unterschiedlichen Leimauftragsformatteilen (74, 76) und
- Koppeln des Kupplungsstücks (6, 6') mit dem Gegenkupplungsstück (8, 8') der weiteren Schlauchverbindung (5, 5') des ausgewählten Leimauftragsformatteils (74, 76), womit einhergehend zwischen dem jeweiligen Leimschlauch (15, 15') des Leimgeräts (72) und dem jeweiligen weiteren Leimschlauch (5, 5`) des jeweiligen ausgewählten Leimauftragsformatteils (74, 76) über das Kupplungsstück (6, 6') und das mit dem Kupplungsstück (6, 6') gekoppelte Gegenkupplungsstück (8, 8') eine fluidische Verbindung ausgebildet wird.

18. Verfahren nach Anspruch 17, bei welchem das Kupplungssystem (1) einen Schließmechanismus (60) besitzt, über den das Gehäuse (40) verriegelt ist und wobei eine jeweilige Ist-Temperatur des Kupplungsstücks (6, 6') über einen Temperatursensor festgestellt wird, wobei der Temperatursensor und die Verriegelung zusammenwirken, so dass die Verriegelung aufrechterhalten wird, wenn sich die Ist-Temperatur oberhalb einer vorgegebenen Soll-Temperatur befindet.
